# EUROPEAN PATENT APPLICATION

(11) **EP 1 796 418 A1**
(43) Date of publication of application: **13.06.2007**
(21) Application number: 06125179.9
(22) Date of filing: 30.11.2006
(51) Int. Cl.: H04Q 7/38, H04L 12/56

(54) **Channel assigning method and system for radio base station group**

(30) Priority: 09.12.2005 JP 2005356276
(71) Applicant: FUJITSU LIMITED, Kawasaki-shi, Kanagawa 211-8588 (JP)
(72) Inventor: Ushiki, Kazumasa c/o Fujitsu Ltd.,, Kawasaki-shi, Kanagawa 211-8588 (JP); Sawada, Kensuke c/o Fujitsu Ltd.,, Kawasaki-shi, Kanagawa 211-8588 (JP); Fukazawa, Mitsunori c/o Fujitsu Ltd.,, Kawasaki-shi, Kanagawa 211-8588 (JP); Okubo, Naofumi c/o Fujitsu Ltd.,, Kawasaki-shi, Kanagawa 211-8588 (JP)
(74) Representative: Hitching, Peter Matthew

(57) **Abstract**

A channel assigning method, carried out by a radio base station group (1-1), includes determining assignment of a communication channel between a communication terminal entering a radio area of the radio station group and all radio base stations within the radio station group by a base station in the radio base station group. Channel assigning information common to the radio base station group is updated as to the determined communication channel and a communication channel is assigned to the communication terminal with reference to the channel assigning information by each radio base station in the radio base station group other than the radio base station. Such a channel assigning method can reduce the processing load such as channel assignment and an authentication process in a plurality of radio base stations and communication terminals, and quickly and efficiently assign channels to the communication channels.

## Description

The present invention relates to a channel assigning method by a radio base station group and a radio system and more specifically to a channel assigning method and a radio system for assigning, with a radio base station group formed of a plurality of radio base stations, a communication channel for a communication terminal which can realize communication in the infrastructure communication mode or ad-hoc communication mode while it is moving such as a portable phone terminal, a PHS (Personal Handy Phone System) terminal, a portable personal computer, and a mobile communication apparatus or the like.

In general, an ordinary wireless LAN system includes an infrastructure communication mode in which each portable station (personal computer or the like) is capable of carrying out communication via a fixed base station (radio access point) and an ad-hoc communication mode in which each station is capable of carrying out direct communication with another station within a short distance.

In the ordinary wireless LAN system, the infrastructure communication mode and the ad-hoc communication mode are not aimed at carrying out communication while a communication terminal is moving at a high velocity. Sufficient discussion has not yet actually been conducted for realization of the infrastructure communication or the ad-hoc communication directed to a communication terminal which is carrying out communication while it is moving at a high velocity.

Prior art Japanese published patent application JP-A No. 2003-264565 describes an infrastructure type wireless LAN system for realizing roaming with a reduced number of scans in a terminal by statistically forecasting a roaming destination access point of the terminal on the basis of the roaming history for reduction in the scanning time. Moreover, Japanese published patent application JP-A No. 1999-55318 describes a mobile terminal and a control method thereof in which the mobile terminal can connect the infrastructural network (infra NW), as the permanent network and the ad-hoc network (ad-hoc NW) as the temporary network formed of only a plurality of terminals by moving between these networks.

In a conventional mobile radio system such as a portable phone, the processes for authenticating a communication terminal and assigning a channel have been conducted each time a radio base station connected with a radio link changes as the communication terminal moves. However, when a setting interval of the radio base stations is rather short, the processes explained above must be conducted frequently for each radio base station. As a result, when the communication terminal moves at a particularly high velocity, the amount of processing required is beyond the capability of the mobile phone, resulting in the likelihood of inaccurate communication by the communication terminal. In addition, when many communication terminals are connected to the radio base station within a short period of time, the base station is required to conduct these processes at a high speed and thereby a problem as explained above may also arise.

Therefore, in one aspect, the present invention provides a channel assigning method and a radio system with which processing load, such as a channel assignment and authentication process in a plurality of radio base stations, can be alleviated preferably even when a communication terminal is moving at a high velocity. As a result, the channel can be assigned more efficiently to the terminal. In addition, high quality communication can be ensured even in the infrastructure communication mode or the ad-hoc communication mode.

One aspect of the present invention utilizes a channel assigning method by a radio base station group, comprising determining assignment of a communication channel between a communication terminal entering a radio area of the radio base station group and radio base stations within the radio base station group by a base station in the radio base station group, updating channel assigning information common to the radio base station group as to the determined communication channel, and assigning the determined communication channel to the communication terminal with reference to the channel assigning information for each radio base station in the radio base station group other than the base station.

In another aspect, the channel assigning method further comprises changing, by the base station, in accordance with a moving velocity of the entering communication terminal, whether the communication channel for the other radio base stations in the group is determined.

In another aspect, the channel assigning method further comprises authenticating the entering communication terminal by the base station, storing an authentication result in a common database in the radio base station group, and authenticating the communication terminal with reference to the stored authentication result by each radio base station in the radio base station group other than the base station.

In another aspect, the channel assigning method further comprises storing the channel assigning information in a common database in the radio base station group by the base station and assigning the communication channel to the communication terminal with reference to the channel assigning information of the common database by each radio base station in the radio base station group other than the base station.

In another aspect, the channel assigning method further comprises transmitting and receiving the channel assigning information among the other radio base stations in the radio base station group with a token-ring by the base station.

In another aspect, the channel assigning method further comprises transmitting and receiving the channel assigning information with a common control channel used in common by the base station and the communication terminal.

In another aspect, the channel assigning method further comprises transmitting and receiving the channel assigning information with an individual control channel used individually in each radio base station of the radio base station group.

In another aspect, the channel assigning method further comprises updating the channel assigning information, when the base station assigns an idle communication channel to the communication terminal, by the base station which received a communication assigning request from the communication terminal and confirming that the communication channel is assigned to the communication terminal with reference to the updated channel assigning information by the communication terminal.

In another aspect, the channel assigning method further comprises transmitting information using an idle channel with reference to the channel assigning information by the communication terminal, updating the channel assigning information by assigning the idle channel to the communication terminal when the information transmitted with the idle channel is received normally by the radio base station and confirming that the communication channel is assigned to the communication terminal with reference to the updated channel assigning information by the communication terminal.

In another aspect, the channel assigning method further comprises instructing the communication terminal, by the base station, to transmit and receive information via a radio base station instead of transmission and reception of the information with an ad-hoc communication, transmitting the information to the base station with infrastructure communication according to the instruction from the communication terminal and transmitting the information transmitted from the communication terminal with a broadcast transmission to the other communication terminal in the infrastructure communication from the base station.

In another aspect, the channel assigning method further comprises instructing the communication terminal, by the base station, to conduct transmission and reception of information with another communication terminal with an ad-hoc communication by a carrier sense multiple access/collision avoidance (CSMA/CA) on the basis of time slots assigned in a time division multiple access (TDMA) frame, and assigning sequentially an idle time slot as a communication channel to the communication terminal in order that information is transmitted sequentially in assigned time slots in the TDMA frame.

In another aspect, the channel assigning method further comprises transmitting information by inserting a dummy signal into an idle time slot when the idle time slot is occurred between a plurality of assigned time slots.

In another aspect, the channel assigning method further comprises transmitting a dummy signal preceding a leading area of the TDMA frame.

Another aspect of the present invention utilizes a radio system formed by defining a plurality of radio base stations as a radio base station group, the radio system comprising means for determining assignment of a communication channel between a communication terminal entering a radio area of the radio base station group and all radio base stations in the group, with a base station among the plurality of radio base stations, which received a first signal from the communication terminal within the radio base station group, means for updating a channel assigning information of the radio base station group for the assigned communication channel by the base station, and means for assigning the communication channel with the communication terminal with reference to the channel assigning information by each radio base station in the radio base station group other than the base station.

In another aspect, the radio system further comprises carrier synchronizing means for aligning a phase of each carrier among each radio base station in the radio base station group, whereby each radio base station generates the carriers synchronized with the carrier synchronizing means.

Reference will now be made, by way of example, to the accompanying drawings, in which:

Fig. 1 is a diagram illustrating an example of channel assignment to a communication terminal by a base station group in accordance with an embodiment of the present invention.

Figs. 2(a) and 2(b) are diagrams illustrating a practical example of channel format and assignment in each base station (AP) group.

Fig. 3 is a diagram illustrating a radio system including grouped base stations provided with a carrier synchronizing means.

Fig. 4 is a diagram illustrating a practical example of time division multiple access (TDMA) in the terminal-to-terminal communication.

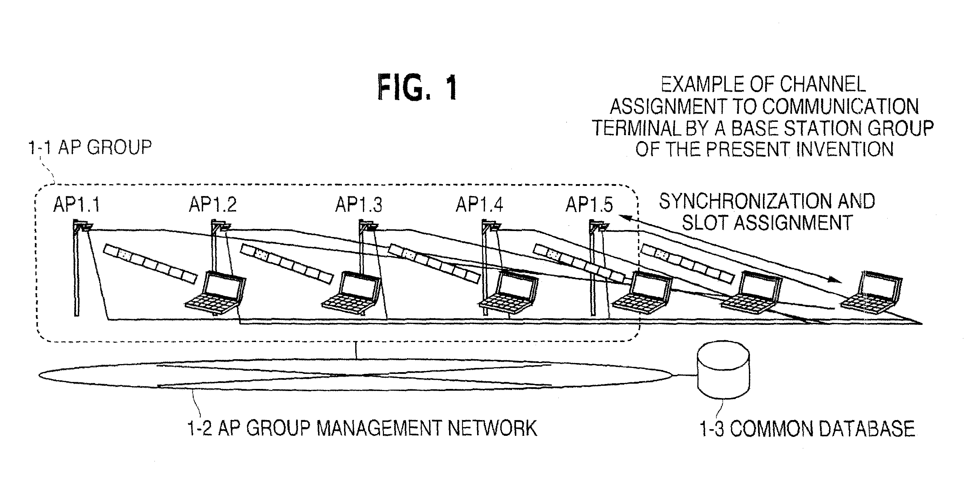

Fig. 1 illustrates an example of communication channel assignment to a communication terminal by a radio base station group in accordance with one aspect of the present invention. In Fig. 1, 1-1 denotes a base station (AP: access point) group. AP1.1, AP1.2, AP1.3, AP1.4, AP1.5 denote base stations. 1-2 denotes a base station (AP) group management network. 1-3 denotes a common database. In this specification, "radio base station", "communication terminal" and "communication channel" may be abbreviated as required as "base station", "terminal" and "channel".

### (1) Channel Assignment and Continuous Channel Use

When a communication terminal carries out communication with any of the grouped base stations by forming a base station group through connection of a plurality of base stations AP1.1, AP1.2, AP1.3, AP1.4, and AP1.5 to the base station (AP) group management network 1-2, an infrastructure communication channel assigned by any base station in the group is continuously used also for communications with the other base stations.

A practical example of an assignment of a communication channel in accordance with one aspect of the present invention can be suitably applied to a radio system which utilizes communication channels such as frequency division multiplex channels or multiplex channels or the like, combining frequency division multiplexing and time division multiplexing (OFDMA: Orthogonal Frequency Division Multiple Access). As the frequency division multiplexing, orthogonal frequency division multiplexing (OFDM) can be used. Moreover, the communication channel used in the present invention can also be a communication channel in any direction of the uplink communication channel of the infrastructure communication channel (communication to a base station from a terminal) and the downlink communication channel thereof (communication to a terminal from a base station).

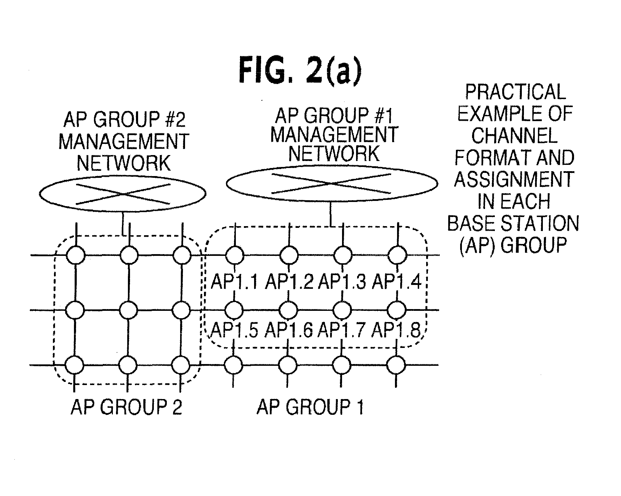

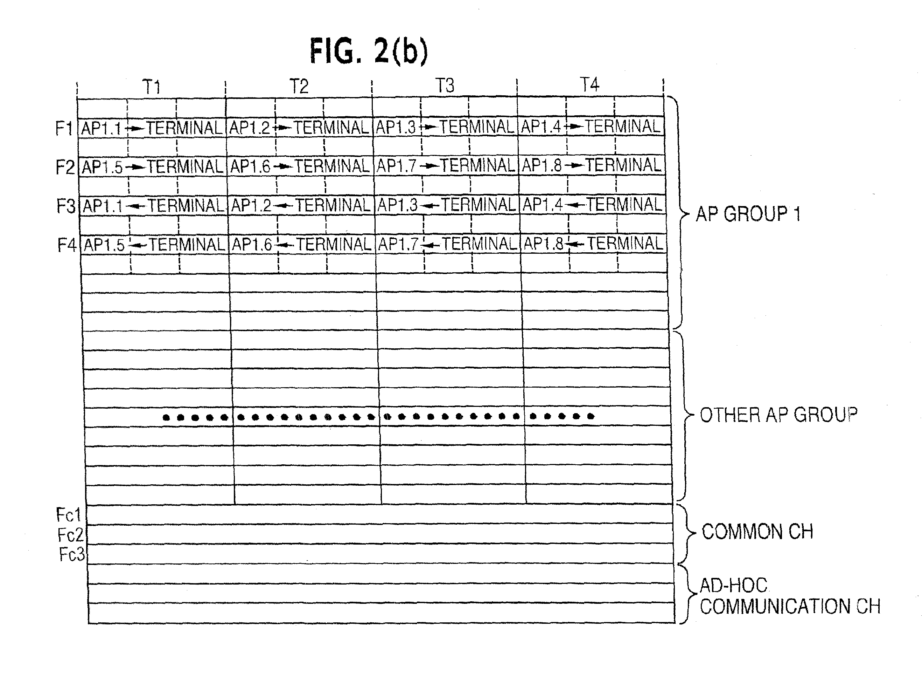

Fig. 2 illustrates a practical example of channel format and assignment in each base station (AP) group. As illustrated in Fig. 2(a), the first base station (AP) group #1 is formed of eight base stations AP1.1, AP1.2, ..., AP1.8. Moreover, as the channel used in each base station belonging to AP group #1, a multiplex channel combining frequency division multiplexing and time division multiplexing is used, as illustrated in Fig. 2(b).

In Fig. 2(b), frequency is graduated on the vertical axis, while time (time slot) is represented on the horizontal axis. In the example of Fig. 2(b), the channels of time slots T1, T2, T3, and T4 for the frequency F1 are assigned as downlink communication channels from the base stations AP1.1, AP1.2, AP1.3, and AP1.4. The channels of time slots T1, T2, T3, and T4 for the frequency F2 are assigned as downlink communication channels from the base stations AP1.5, AP1.6, AP1.7, and AP1.8. Moreover, the channels of time slots T1, T2, T3, and T4 for the frequency F3 are assigned as uplink channels to the base stations AP1.1, AP1.2, AP1.3, and AP1.4. The channels of time slots T1, T2, T3, and T4 for the frequency F4 are assigned as uplink channels to the base stations AP1.5, AP1.6, AP1.7 and AP1.8. If these time slots are further divided into a plurality of smaller time slots (indicated by a dotted line), the base station may assign any of these slots to a terminal.

In Fig. 2(b), three lines are used for description of the frequencies F1 to F4. Each line may indicate a sub-carrier in the OFDMA and one channel may be realized with three sub-carriers in Fig. 2(b). The number of sub-carriers is not limited to three and the desired number of sub-carriers may also be used.

As a first method of assigning a communication channel, it is possible to introduce a method for assigning the same channel which a terminal can use for communications with any base station in the base station group. This method can be applied suitably particularly for assignment of a communication channel to a terminal which is moving at high velocity.

According to this assigning method, even when a terminal moves, a change of channel in the base station of the moving destination is not required. Moreover, the carrier synchronization setup process which is executed by the terminal for each base station when the base station changes is no longer required by applying a carrier synchronizing means which will be explained later to the base station in the same group.

As a second method for assigning a communication channel, it is possible to use a method wherein one base station is capable of assigning at one time, a plurality of channels to be used for communication with individual base stations of the base station group. This method is particularly suitable for assigning a communication channel to a terminal which is moving at an intermediate velocity. According to this method, even when the terminal moves, the channel assigning process is no longer required as long as the terminal moves around in an area covered by the base station group. However, the carrier synchronization setup process is required if the terminal switches its base station, even though the terminal moves around in an area covered by the base station group.

In a third method for assigning a communication channel, it is possible to assign a channel to a terminal each time by an individual base station in the base station group when the terminal moves at a low velocity. In the case of the second assigning method explained above, since the plurality of channels are assigned previously for communication with the base stations in the base station group, if the terminal changes its moving direction, some of the previously assigned channels are invalidated. However, in this third assigning method, since the base station assigns only one communication channel each time when the terminal switches its base station, invalidation of the communication channel is not occurred. Accordingly, the optimum communication channel assignment can be performed in accordance with the terminal moving velocity. In other words, the first method is applied when the terminal is moving at a high velocity, the second method is applied when the terminal is moving at an intermediate velocity, and the third method is applied when the terminal is moving at a low velocity.

In order to detect a terminal moving velocity, a terminal can be provided with a position measuring means such as a GPS (Global Positioning System) to calculate the moving velocity of the terminal, based on the position information acquired with the position measuring means, and to transmit the moving velocity information at the time of requesting a channel assignment to the base station.

### (2) Common Use of Channel Assigning Information

The information (channel assigning information) regarding an assigning state of an infrastructure communication channel to each base station is shared in the base station group. The base stations in the group assigns the infrastructure communication channels on the basis of the shared information.

The channel assigning information for an infrastructure communication channel is formed of each of the following information: (i) channel identifying information (frequency, time slot number or the like), (ii) channel idle or busy information, and (iii) terminal information which is using a channel(terminal identifying information) when the channel is busy.

It is also possible to generate data combining the channel idle or busy information (ii) and terminal information (iii) by storing the terminal identifying information (iii) as the channel idle or busy information (ii) when the channel is busy.

In order to share the channel assigning information, it is also possible to utilize following two methods:

(i) storing the channel assigning information to the common database 1-3 on the base station (AP) group management network 1-2 and referring to the channel assigning information from each base station by making access to the common database 1-3,

(ii) transmitting and receiving the channel assigning information in the token-ring system among the base stations in the same group.

### (3) Common Use of Authentication Information

The authentication process for a terminal which is required when it is connected to the base station in the group, is conducted by executing the authentication process only in the first base station of the group. The result of the authentication process is stored in the common database 1-3 in the base station group as the authentication result information, together with the ID information of the relevant terminal. The authentication result information stored in the common database 1-3 is referred to by the other base stations in the base station group by using the terminal ID information.

Otherwise, the authentication information may be used in common by transmitting and receiving the authentication result information among the base stations in the group in a token-ring system. Thus, a high speed authentication process can be realized by eliminating the authentication process if the terminal has been authenticated by one base station in the base station group.

### (4) Carrier Synchronization

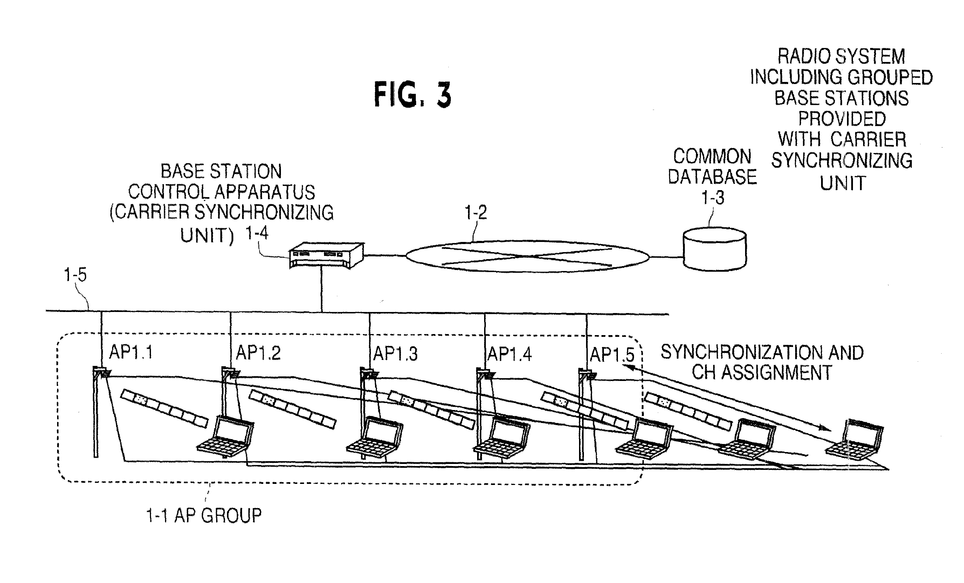

The phase of each carrier (carrier wave) can be controlled among the base stations by providing a carrier synchronizing unit as illustrated in Fig. 3, to the base station group.

When the carriers are synchronized among the base stations in the base station group with the carrier synchronizing unit in the timing that the terminal establishes synchronization with the carrier (phase alignment of the radio wave to be used), signals may be transmitted and received quickly by once establishing synchronization between one base station in the base station group and the terminal, without establishment of synchronization by the terminal when it switches base station in the same station group.

Particularly when one channel with which the terminal is capable of continuously using the same channel for communication with any base station in the same group, is assigned with the first method for channel assignment, the terminal station can communicate continuously on the same channel with the base station in the group under the condition that carrier synchronization is once established with the first base station, without establishment of synchronization with the other base stations.

in general, carrier synchronization is established with the apparatus in the receiving side. The terminal establishes carrier synchronization for the downlink communication channel (channel transmitted from the base station). The base station establishes carrier synchronization for the uplink communication channel (channel transmitted from the terminal).

The synchronization establishment process for each base station can be eliminated by establishing carrier synchronization with a base station control apparatus for the communication with one base station, and utilizing the phase information of the uplink communication channel obtained by such carrier synchronization for communication with the other base station in the base station group. Moreover, in the uplink communication channel, the quality of the receiving signal can be improved by selecting, with the base station control apparatus, the best signal from the receiving signals or by combining the receiving signals received by a plurality of base stations.

### (5) Common Control Channel

As an example of a common control channel structure, it is possible to set the channel of the time slots T1, T2, T3, and T4 of the frequencies Fc1, Fc2, and Fc3 as the common control channel as illustrated in Fig. 2(b). Moreover, it is also possible to use the other access system such as CSMA/CA without division of the common control channels into a plurality of time slots.

The channel assigning information for infrastructure communication is transmitted with the common control channel. In the case where the carrier synchronizing unit is used, the base station control apparatus 1-4 generates and transmits the channel assigning information for the infrastructure communication. When the carrier synchronizing unit 1-4 is not used, each base station periodically transmits the channel assigning information for infrastructure communication.

The transmission timings are previously adjusted to eliminate overlapping thereof in the base stations of the same group, in order to protect the transmitted infrastructure communication channel assigning information from destruction due to collision with the transmitting signal from another base station or mobile terminal. Moreover, simultaneous transmissions of the base station and mobile terminal are prevented by including the transmission period (or the next transmission time) in the transmitting information, and then transmitting the information on the common control channel from the terminal after reception of such information.

### (6) Individual Control Channel

It is also possible to employ an embodiment, instead of the embodiment using the common control channel explained above, in which the individual control channels are provided for each base station belonging to the radio system in which the radio base stations are grouped. In this case the infrastructure channel assigning information is transmitted with the individual control channels.

When a carrier synchronizing unit is used, the base station control apparatus 1-4 generates and transmits the infrastructure communication channel assigning information on the individual control channel. Meanwhile, when the carrier synchronizing unit is not provided, each base station periodically transmits the infrastructure communication channel assigning information. A mobile terminal receives all individual control channels.

### (a) First embodiment of channel assigning in infrastructure communication

When a mobile terminal enters in an area covered by a new base station group, it requests channel assignment of the infrastructure communication using the common control channel. A base station having received this request assigns an infrastructure communication channel in the idle condition to the mobile terminal. In this timing, the infrastructure communication channel assigning information is updated. The mobile terminal confirms the channel information assigned to it by referring to the infrastructure communication channel assigning information on the common control channel as a result of the channel assignment.

When each base station uses the individual control channel, the terminal requests, with the similar method, assignment of the infrastructure communication channel by using the individual control channel having the highest received signal quality when it enters an area covered by a new base station group. A base station having received this assignment request, assigns the infrastructure communication channel in the idle condition to the mobile terminal. In this timing, the infrastructure communication channel assigning information is updated. The terminal confirms the channel assigned to itself with reference to the infrastructure channel assigning information transmitted via the individual control channel as the channel assignment result information.

When the terminal requests release of the infrastructure communication channel with the method similar to that for requesting channel assignment, one base station receives the request and releases the infrastructure communication channel. Alternatively, when a base station has detected that the assigned infrastructure communication channel is never used for a constant period, this base station can release the infrastructure communication channel forcibly by setting the channel to the idle condition.

### (b) Second embodiment for assigning infrastructure communication channel

The terminal receives the infrastructure communication channel assigning information on the common control channel, searches for an idle channel by referring to the infrastructure communication channel assigning information, and transmits information by using the same idle channel when such idle channel is detected.

The base station assigns, when another terminal is not transmitting information by using the idle channel, the idle channel to the terminal which has transmitted the information by using such an idle channel. In this timing, such an idle channel is set to the busy channel and the infrastructure communication channel assigning information is updated. The terminal confirms the result of channel assigning by referring to the infrastructure communication channel assigning information transmitted via the common control channel and recognizes, when it's terminal identifying information is written in the user information of the channel used for transmission by it's terminal, such channel as the channel assigned to it's terminal.

When a plurality of terminals have transmitted information using the same idle channel, the transmitted information pieces collide with each other and thereby the information cannot be received normally by the base station. In this case, the base station does not assign such channel to the terminals. When the terminal confirms, after transmission of information by using the idle channel, that the channel is not assigned to it's terminal by referring to the infrastructure communication channel assigning information, the terminal waits for a random period of time and then tries transmission of information by using the other idle channel.

The uplink communication channel of infrastructure communication can be assigned with the method explained above. However, when the terminal requests the downlink communication channel, it describes that it also requests the downlink channel to the header at the time of transmitting the information by using the uplink idle channel. The base station reads the description in the header and assigns the downlink communication channel. Or, it is also possible that the downlink communication channel is requested by using the common control channel or individual control channel as in the case of the first embodiment explained above.

### (C) Embodiment for terminal-to-terminal communication via the base station

This embodiment realizes communications among the mobile terminals via the base station when the terminals have moved to the area near the base station to enable communication therewith, under the conditions that these are conducting direct communications (ad-hoc communications) because these are separated far from the base station and are thereby disabled in communication therewith.

This embodiment can be suitably applied, for example, in the following case. That is, when the mobile terminals of a plurality of vehicles are making direct communication (ad-hoc communication) while the vehicles are moving, if a taller large-size vehicle interrupts communication between these vehicles, the radio wave transmitted and received between the communicating vehicles is shielded with the taller large-size vehicle, disabling such normal direct communication (ad-hoc communication). However, since the base station is installed in a much higher area than the mobile terminals, communication is not interfered by the taller large-size vehicle, and the quality of terminal-to-terminal communication can be improved by realizing the terminal-to-terminal communication via the base station.

Moreover, as a practical example of communication contents, the terminals communicate their position information to detect the positions of other terminals through the broadcast communication among the terminals. In this case, if the base station is not in the vicinity, each terminal broadcasts the position information of it's own terminal obtained with a position measuring means such as a GPS (Global Positioning System) to ambient terminals by using an ad-hoc communication channel.

When a terminal is in an area near the base station, the base station requests each terminal to notify the position information thereof in order to detect the position at the base station side, and then broadcasts to all terminals the position information. The base station instructs each terminal to make communication via the base station by using a common control channel or an individual control channel, in addition to the infrastructure communication channel assigning information. In this case, the base station also notifies the address thereof as the destination of information and the broadcast channel identifying information thereof.

The channel required for communications between the base station and each terminal can be obtained with the first and second embodiments for assigning the infrastructure communication channel explained above. The terminal transmits, to the base station, the information which has been transmitted to the broadcast address with the ad-hoc communication channel by using the infrastructure communication channel.

The base station conducts broadcast transmission of the information received from the terminal with the broadcast channel. In order to make it easier for the base station to detect the information for the broadcast transmission on the broadcast channel, the terminal transmits the header with the addition of a mark indicating the information to be broadcasted at the time of transmitting the above information.

When the carrier synchronizing means of the radio system including the base station group is provided, it can be realized, for example, by a ROF (Radio On Fiber) technique, the information transmitted to the terminal is generated with the base station control apparatus 1-4 located in the higher hierarchy of the carrier synchronizing means, and this information is transmitted to the terminal through all base stations in the group. When the carrier synchronizing means is provided, the process explained above is never executed with the base station, but with the base station control apparatus 1-4 or the like located in the higher hierarchy of the carrier synchronizing means. All terminals receive the broadcast channel but since only the information of the terminals existing in the periphery of a particular terminal is often considered as the information to be processed among the information received with the broadcast channel, the terminal selects and processes the information related to it's own terminal.

In addition, the terminal can easily select information related to it's own terminal by transmitting, from each base station, after removing the information unrelated to it's terminal from the information transmitted to all base stations in the group from the base station control apparatus 1-4 with a filter provided in each base station. However, the base station is requested to recognize the channel used for transmitting the information related to it's own base station. In addition, the terminal selects and processes the information of the terminals located in the area within the predetermined distance on the basis of the position information of it's own terminal measured with the position measuring means.

### (d) Embodiment for TDMA of terminal-to-terminal communication in the base station area

This embodiment is applied to the case where the terminals are conducting communication with the time division multiple access (TDMA) in the base station area when the terminals which have conducted communication with the carrier sense multiple access with collision avoidance (CSMA/CA) in the area separated far from the base station, has entered the base station area.

The terminal issues a request for channel assignment with a similar method for infrastructure communication channel assignment for assignment of the uplink channel of ad-hoc communication channel or the downlink channel thereof. A base station which has received this request, assigns the uplink channel or downlink channel of ad-hoc communication in the idle state. The uplink channel or downlink channel of the ad-hoc communication channel can also be assigned with a similar method for infrastructure communication channel assignment.

When communications are executed with time division multiple access (TDMA), the ad-hoc communication channel is divided into TDMA frames in the base station area. Moreover, the TDMA frame is divided into time slots, and the base station sequentially assigns the idle time slots in order that information is transmitted consecutively transmitted in the assigned time slots within the TDMA frame.

The instruction for TDMA is added to the channel assignment information of infrastructure communication and it is instructed to make terminal-to-terminal communication in the base station area with the time division multiple access (TDMA) by the common control channel or individual control channel. As the time slot (namely, channel) assigning method, assignment can be performed with a method similar to the first or second embodiment for infrastructure communication channel assignment explained above.

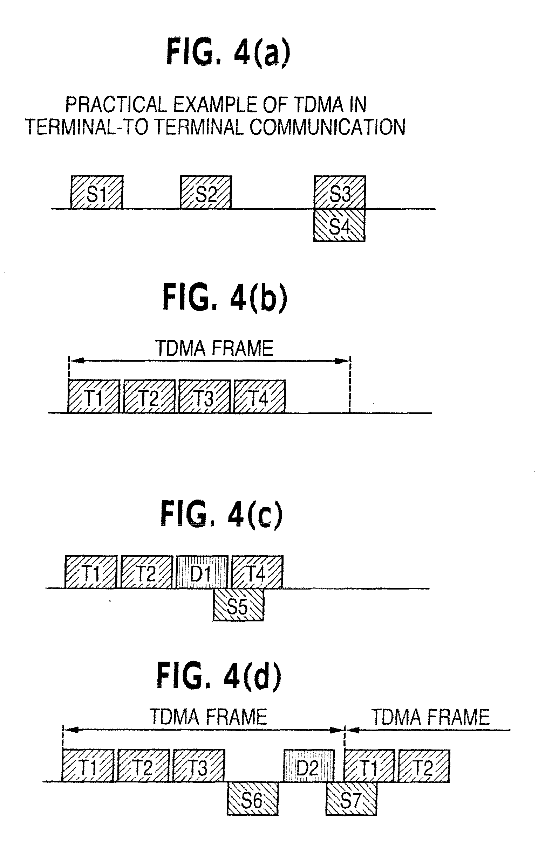

Fig. 4 illustrates practical examples of TDMA for the terminal-to-terminal communications. Fig. 4(a) indicates a profile of communication with the random access system such as the carrier sense multiple access/collision avoidance (CSMA/CA) among the terminals. The terminal senses that the transmitting signal carrier is not transmitted from the other terminals and then transmits the data signals S1, S2. However, in some cases, a plurality of terminals respectively sense that the carrier is not transmitted, and simultaneously transmit the data S3 and S4, resulting in a collision of transmissions.

In order to avoid collision of transmissions as explained above between the terminal communicating with CSMA/CA in the area near the base station area and the terminal communicating with TDMA in the area within the base station area, the ad-hoc communication channel is divided into time slots in the TDMA frame in the base station area as illustrated in Fig. 4(b). The base station sequentially assigns the idle time slots to continuously transmit the assigned time slots T1, T2, T3, T4, ...... within the TDMA frame. Thereby, the ad-hoc communication channels can be effectively allocated on the time axis without gap, and collision with the signals transmitted by the CSMA/CA system can be reduced.

However, if the time slot T3 is released, resulting in the non-signal state as illustrated in Fig. 4(c), even when the idle time slots are assigned sequentially to continuously transmit the assigned time slots T1, T2, T3, T4, ..., it is considered that the next assigned time slot T4 is broken through collision with the transmitting signal S5 by the CSMA/CA from the terminal in the area near the base station area. In this case, the terminal or the base station transmits the dummy signal D1 to the time slot T3 preceding the assigned time slot T4.

Moreover, the rear part of the TDMA frame is defined as a non-assigned area and the transmitting signals S6, S7 by the CSMA/CA from the terminal in the area near the base station area are transmitted with this non-assigned area as illustrated, for example, in Fig. 4(d). The transmitting signal S6 illustrated in Fig. 4 does not collide with the assigned time slots T1, T2, and T3, but the signal S7 transmitted in the area near the end of the TDMA frame collides with the assigned time slot T1. Therefore, collision at the leading area of the TDMA frame can be avoided by transmitting the dummy signal D2 to the area preceding the leading area of the TDMA frame.

The dummy signal from the base station is transmitted to protect the leading time slot of the assigned time slot group from destruction when an idle time slot is generated among a plurality of assigned time slots. The dummy signal from the terminal is transmitted when the information is not transmitted with the assigned time slot. When the carrier synchronizing means is provided at the time of transmitting the dummy signal from the base station, it is also possible to transmit the dummy signal from the base station control apparatus. Moreover, when the carrier synchronizing means is not provided, all base stations may transmit the dummy signal.

In addition, it is also possible to transmit the dummy signal within the respective time domains in charge from each base station by assigning each time slot in the TDMA frame to each base station of the group. Moreover, it is possible for a certain representative base station to always transmit the dummy signal or for the representative base station determined in every time period to transmit the dummy signal.

In an embodiment of the present invention, the channel assigning process and the authenticating process can be conducted quickly by determining at a time, in one radio base station in the group of radio base stations, the communication channels to be assigned in the other radio base station in the same group and also by conducting the authentication process on the basis of the authentication result in one radio base station. Moreover, the channel can be assigned efficiently, without any invalid channel assignment, by changing whether the communication channel assignment is determined at a particular time or not in accordance with the moving velocity of the communication terminal.

This application is related to and claims priority to Japanese Application No. 2005-356276 filed December 9, 2005 in the Japanese Patent Office, the contents of which are incorporated by reference herein.

## Claims

1. A channel assigning method by a radio base station group, comprising:
determining assignment of a communication channel between a communication terminal entering a radio area of the radio base station group and radio base stations within the radio base station group, by a base station in the radio base station group;
updating channel assigning information common to the radio base station group as to the determined communication channel; and
assigning the determined communication channel to the communication terminal with reference to the channel assigning information for each radio base station in the radio base station group other than the base station.

2. The channel assigning method according to claim 1, further comprising changing, by the base station, in accordance with a moving velocity of the entering communication terminal, whether the communication channel for the other radio base stations in the group is determined.

3. The channel assigning method according to claim 1 or 2, further comprising:
authenticating the entering communication terminal by the base station,
storing an authentication result in a common database in the radio base station group; and
authenticating the communication terminal with reference to the stored authentication result by each radio base station in the radio base station group other than the base station.

4. The channel assigning method according to claim 1, 2 or 3, further comprising:
storing the channel assigning information in a common database in the radio base station group by the base station; and
assigning the communication channel to the communication terminal with reference to the channel assigning information of the common database by each radio base station in the radio base station group other than the base station.

5. The channel assigning method according to claim 1, 2 or 3, further comprising transmitting and receiving the channel assigning information among the other radio base stations in the radio base station group with a token-ring by the base station.

6. The channel assigning method according claim 1, 2 or 3, further comprising transmitting and receiving the channel assigning information with a common control channel used in common by the base station and the communication terminal.

7. The channel assigning method according to claim 1, 2 or 3, further comprising transmitting and receiving the channel assigning information with an individual control channel used individually in each radio base station of the radio base station group.

8. The channel assigning method according to any preceding claim, further comprising:
updating the channel assigning information, when the base station assigns an idle communication channel to the communication terminal, by the base station which received a communication assigning request from the communication terminal; and
confirming that the communication channel is assigned to the communication terminal with reference to the updated channel assigning information by the communication terminal.

9. The channel assigning method according to any preceding claim, further comprising:
transmitting information using an idle channel with reference to the channel assigning information by the communication terminal;
updating the channel assigning information by assigning the idle channel to the communication terminal when the information transmitted with the idle channel is received normally by the radio base station; and
confirming that the communication channel is assigned to the communication terminal with reference to the updated channel assigning information by the communication terminal.

10. The channel assigning method according to any preceding claim, further comprising:
instructing the communication terminal, by the base station, to transmit and receive information via a radio base station instead of transmission and reception of the information with an ad-hoc communication;
transmitting the information to the radio base station with infrastructure communication according to the instruction from the communication terminal; and
transmitting the information transmitted from the communication terminal with a broadcast transmission to the other communication terminal in the infrastructure communication from the radio base station.

11. The channel assigning method according to any preceding claim, further comprising;
instructing the communication terminal, by the base station, to conduct transmission and reception of information with another communication terminal with an ad-hoc communication by a carrier sense multiple access/collision avoidance (CSMA/CA) on the basis of time slots assigned in a time division multiple access (TDMA) frame; and
assigning sequentially an idle time slot as a communication channel to the communication terminal in order that information is transmitted consecutively in the assigned time slots in the TDMA frame.

12. The channel assigning method according to claim 11, further comprising transmitting information by inserting a dummy signal into an idle time slot when the idle time slot is occurred between a plurality of assigned time slots.

13. The channel assigning method according to claim 11, further comprising transmitting a dummy signal preceding a leading area of the TDMA frame.

14. A radio system formed by defining a plurality of radio base stations as a radio base station group, the radio system comprising:
means for determining assignment of communication channel between a communication terminal entering a radio area of the radio base station group and all radio base stations in the group, with a base station among the plurality of radio base stations, which received a first signal from the communication terminal within the radio base station group;
means for updating a channel assigning information of the radio base station group for the assigned communication channel by the base station; and
means for assigning the communication channel with the communication terminal with reference to the channel assigning information by each radio base station in the radio base station group other than the base station.

15. The radio system according to claim 14, further comprising carrier synchronizing means for aligning a phase of each carrier among each radio base station in the radio base station group, whereby each radio base station generates the carriers synchronized with the carrier synchronizing means.
